(19) Europäisches Patentamt
European Patent Office
Office européen des brevets

(11) **EP 3 252 288 A1**

(12) **EUROPEAN PATENT APPLICATION**
published in accordance with Art. 153(4) EPC

(43) Date of publication:
06.12.2017 Bulletin 2017/49

(51) Int Cl.:
*F02D 9/10* (2006.01)     *F02D 45/00* (2006.01)
*F02D 41/18* (2006.01)     *F01N 3/24* (2006.01)

(21) Application number: 15880154.8

(22) Date of filing: 18.12.2015

(86) International application number:
PCT/JP2015/085438

(87) International publication number:
WO 2016/121262 (04.08.2016 Gazette 2016/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.01.2015 JP 2015016396

(71) Applicant: Yamaha Hatsudoki Kabushiki Kaisha
Iwata-shi, Shizuoka 438-8501 (JP)

(72) Inventors:
• HAYASHIDERA, Hitoshi
Iwata-shi
Shizuoka 438-8501 (JP)
• HARA, Takahiko
Iwata-shi
Shizuoka 438-8501 (JP)

(74) Representative: Zimmermann, Tankred Klaus et al
Schoppe, Zimmermann, Stöckeler
Zinkler, Schenk & Partner mbB
Patentanwälte
Radlkoferstrasse 2
81373 München (DE)

(54) **ENGINE UNIT**

(57) An engine unit is provided which is capable of improving the accuracy in the estimation of the temperature of a catalyst, using simple control. A throttle valve (45) is positioned so that a combustion-chamber-side volume is smaller than an atmosphere-side volume, the combustion-chamber-side volume being a volume of a portion of an intake passage member (41) that is from the throttle valve (45) to an intake port (33), the atmosphere-side volume being a volume of a portion of the intake passage member (41) that is from an atmosphere suction port (41 a) to the throttle valve (45). A controller is configured to control the fuel supply amount of a fuel supplier (42) and to estimate the temperature of a catalyst (53), based on the engine rotation speed and based on the opening degree of the throttle valve (45) positioned in the intake passage member (41) so that the combustion-chamber-side volume is smaller.

FIG.2

EP 3 252 288 A1

**Description**

Technical Field

The present invention relates to an engine unit.

Background Art

In an engine unit, the exhaust gas discharged from an engine main body is purified by a catalyst. Traditionally, an engine unit including a controller configured to estimate the temperature of the catalyst has been known (see Patent Literatures 1 and 2, for example).

In Patent Literature 1, the temperature of the catalyst is estimated based on the engine rotation speed and the engine load. Specifically, as a first step, a steady-state estimated temperature, which is the estimated temperature of the catalyst in a steady operation state is calculated based on the engine rotation speed and the engine load. The steady operation state means the state in which the engine unit is under steady state operation. The steady operation state is the operation state of the engine unit, which is not an acceleration state or a deceleration state (i.e., the state in which the engine unit is not under acceleration or deceleration). Then, the calculated steady-state estimated temperature undergoes a smoothing process using a smoothing coefficient, to calculate the estimated temperature of the catalyst. The smoothing coefficient is determined in accordance with the engine rotation speed and the engine load.

In Patent Literature 2, respective temperatures of front and rear ends of a catalyst are estimated. The front end of the catalyst is the upstream end of the catalyst in the flow direction of the exhaust gas. The rear end of the catalyst is the downstream end of the catalyst in the flow direction of the exhaust gas. Specifically, as a first step, a front-end steady-state estimated temperature, which is the estimated temperature of the front end of the catalyst in the steady operation state is estimated based on the air amount, engine rotation speed, engine load, and the like. The estimated temperature of the front end of the catalyst is calculated using the calculated front-end steady-state estimated temperature, a smoothing coefficient for the front end, and the last front-end estimated temperature. First time the temperature is estimated, the temperature of the coolant water, the intake temperature, or the like is used as the "last front-end estimated temperature". The estimated temperature of the rear end of the catalyst is calculated based on: the estimated temperature of the front end; a smoothing coefficient for the rear end, and the last front-end estimated temperature. The smoothing coefficients for the front and the rear ends are calculated based on the air amount, engine rotation speed, engine load, and the like. As such, the temperatures of the front and rear ends of the catalyst are estimated separately from each other, to improve the accuracy in the estimation of the temperature of the catalyst.

Citation List

Patent Literature

[Patent Literature 1] Japanese Unexamined Patent Publication No. 2003-343242
[Patent Literature 2] Japanese Unexamined Patent Publication No. 2011-220178

Summary of Invention

Technical Problem

In cases where the operation state of the engine unit is the acceleration state or the deceleration state, the estimation of the temperature of the catalyst according to Patent Literature 1, 2 may provide a result with poor accuracy. That is to say, the estimated temperature of the catalyst calculated using the method of Patent Literature 1, 2 may have a large difference from the actual temperature of the catalyst. Furthermore, in Patent Literature 2, the respective temperatures of the front and rear ends of the catalyst are estimated, and this makes the control for the estimation of the temperature of the catalyst complicated.

An object of the present invention is to provide an engine unit capable of improving the accuracy in the estimation of the temperature of a catalyst, using simple control.

Solution to Problem and Advantageous Effects of Invention

According to an embodiment of the present teaching, an engine unit includes: an engine main body forming at least one combustion chamber; an intake passage member connecting an intake port provided through the combustion chamber with an atmosphere suction port through which air is taken in from the atmosphere, the air flowing inside the intake passage member from the atmosphere suction port to the intake port; an exhaust passage member connecting an exhaust port provided through the combustion chamber with an atmosphere discharge port through which exhaust gas is discharged to the atmosphere, the exhaust gas flowing inside the exhaust passage member from the exhaust port to the atmosphere discharge port; a catalyst provided in the exhaust passage member; a fuel supplier configured to supply fuel into the combustion chamber; a throttle valve provided in the intake passage member; a throttle position sensor configured to detect an opening degree of the throttle valve; an engine rotation speed sensor configured to detect engine rotation speed; and a controller to which a signal from the throttle position sensor and a signal from the engine rotation speed sensor are input, the controller configured to control a fuel supply amount of the fuel supplier, wherein: The number of throttle valves provided for one combustion chamber is at least one, and the throttle valve is positioned so that a combustion-chamber-side volume is smaller than an atmosphere-side volume, the combustion-chamber-side volume being a volume of a portion of the intake passage member that is from the throttle valve to the intake port, the atmosphere-side volume being a volume of a portion of the intake passage member that is from the atmosphere suction port to the throttle valve. The controller is configured to control the fuel supply amount of the fuel supplier and to estimate a temperature of the catalyst, based on the engine rotation speed and based on an opening degree of the throttle valve positioned in the intake passage member so that the combustion-chamber-side volume is smaller.

The engine unit of the present teaching includes: the engine main body; the intake passage member; the exhaust passage member; the catalyst; the fuel supplier; the throttle valve; the throttle position sensor; the engine rotation speed sensor; and the controller. The engine main body forms the at least one combustion chamber. The intake passage member connects the intake port provided through the combustion chamber with the atmosphere suction port through which air is taken in from the atmosphere. The air flows in the intake passage member from the atmosphere suction port to the intake port. The exhaust passage member connects the exhaust port provided through the combustion chamber with the atmosphere discharge port through which exhaust gas is discharged to the atmosphere. The exhaust gas flows in the exhaust passage member from the exhaust port to the atmosphere discharge port. The catalyst is provided in the exhaust passage member. The fuel supplier is configured to supply fuel into the combustion chamber. The throttle valve is provided in the intake passage member. The throttle position sensor is configured to detect the opening degree of the throttle valve. The engine rotation speed sensor is configured to detect the engine rotation speed. Signals from the throttle position sensor and the engine rotation speed sensor are input to the controller configured to control the fuel supply amount of the fuel supplier. The number of throttle valves provided for one combustion chamber is at least one. The combustion-chamber-side volume, i.e., the volume of the portion of the intake passage member that is from the throttle valve to the intake port, is smaller than the atmosphere-side volume, i.e., the volume of the portion of the intake passage member that is from the atmosphere suction port to the throttle valve. In addition to the above, the controller is configured to control the fuel supply amount of the fuel supplier and to estimate the temperature of the catalyst, based on the engine rotation speed and based on the opening degree of the throttle valve positioned in the intake passage member so that the combustion-chamber-side volume is smaller. Due to this, there is less delay in the change of the amount of air taken into the combustion chamber, in relation to the change in the opening degree of the throttle valve. That is, there is less delay in the change of the combustion in the combustion chamber, in relation to the change in the opening degree of the throttle valve. Consequently, there is less delay in the change of the temperature of the exhaust gas having reached the catalyst, in relation to the change in the opening degree of the throttle valve. As a result, even when the operation state of the engine unit is the acceleration state or the deceleration state, it is possible to estimate the temperature of the catalyst with higher accuracy, using simple control. The larger the opening degree of the throttle valve is, the higher the degree of correlation between the opening degree of the throttle valve and the intake air amount is. In other words, the higher the engine load is, the higher the degree of the above correlation is. For the above reason, it is possible to improve the accuracy in the estimation of the temperature of the catalyst for a high-load range by estimating the temperature of the catalyst based on the engine rotation speed and based on the opening degree of the throttle valve positioned in the intake passage member so that the combustion-chamber-side volume is smaller. That is, it is possible to improve the accuracy in the estimation of the temperature of the catalyst under situations in which the catalyst has a high temperature.

It is preferable that, in the engine unit of the present teaching, the controller includes: a steady-state estimated catalyst temperature calculating unit configured to calculate a steady-state estimated catalyst temperature, which is an estimated temperature value of the catalyst in a steady operation state, based on the engine rotation speed and based on the opening degree of the throttle valve positioned in the intake passage member so that the combustion-chamber-side volume is smaller; and an estimated catalyst temperature calculating unit configured to correct the steady-state estimated catalyst temperature calculated by the steady-state estimated catalyst temperature calculating unit based on information indicating an operation state of the engine unit, thereby to calculate an estimated temperature of the catalyst.

In the above arrangement, the steady-state estimated catalyst temperature calculating unit calculates the steady-state estimated catalyst temperature, which is an estimated temperature value of the catalyst in the steady operation state. The estimated catalyst temperature calculating unit corrects the steady-state estimated catalyst temperature calculated by the steady-state estimated catalyst temperature calculating unit based on information indicating the operation state of the engine unit, thereby to calculate the estimated temperature of the catalyst. The steady-state estimated catalyst temperature calculating unit calculates the steady-state estimated catalyst temperature based on the engine rotation speed and based on the opening degree of the throttle valve positioned in the intake passage member so that the combustion-chamber-side volume is smaller. Due to this, the temperature of the catalyst in the steady operation state can be estimated, using simple control. It is therefore possible to estimate the temperature of the catalyst with higher accuracy, using simple control.

It is preferable that, in the engine unit of the present teaching, the estimated catalyst temperature calculating unit is configured to correct the steady-state estimated catalyst temperature calculated by the steady-state estimated catalyst temperature calculating unit at least based on the opening degree of the throttle valve positioned in the intake passage member so that the combustion-chamber-side volume is smaller, thereby to calculate the estimated temperature of the catalyst.

In this arrangement, the estimated catalyst temperature calculating unit corrects the steady-state estimated catalyst temperature calculated by the steady-state estimated catalyst temperature calculating unit at least based on the opening degree of the throttle valve positioned in the intake passage member so that the combustion-chamber-side volume is smaller. It is therefore possible to estimate the temperature of the catalyst with higher accuracy, using simple control.

It is preferable that, in the engine unit of the present teaching, the estimated catalyst temperature calculating unit is configured to correct the steady-state estimated catalyst temperature calculated by the steady-state estimated catalyst temperature calculating unit at least based on a signal from the engine rotation speed sensor and based on the opening degree of the throttle valve positioned in the intake passage member so that the combustion-chamber-side volume is smaller, thereby to calculate the estimated temperature of the catalyst.

In this arrangement, the estimated catalyst temperature calculating unit uses the opening degree of the throttle valve, positioned in the intake passage member so that the combustion-chamber-side volume is smaller, to correct the steady-state estimated catalyst temperature. In addition to the above, the estimated catalyst temperature calculating unit also uses the signal from the engine rotation speed sensor to correct the steady-state estimated catalyst temperature. It is therefore possible to improve the accuracy in the estimation of the temperature of the catalyst.

It is preferable that, in the engine unit of the present teaching, the catalyst is positioned so that a volume of a first portion of the exhaust passage member, the first portion being from the exhaust port to an upstream end of the catalyst, is smaller than a volume of a second portion of the exhaust passage member, the second portion being from a downstream end of the catalyst to the atmosphere discharge port.

In this arrangement, the volume of the first portion of the exhaust passage member, the first portion being from the exhaust port to the upstream end of the catalyst, is smaller than the volume of the second portion of the exhaust passage member, the second portion being from the downstream end of the catalyst to the atmosphere discharge port. This enables the temperature and the oxygen concentration of the exhaust gas having reached the catalyst to approximate the temperature and the oxygen concentration of the exhaust gas at the time of being discharged from the engine main body. Consequently, there is less delay in the change of the temperature and the oxygen concentration of the exhaust gas having reached the catalyst, in relation to the change in the opening degree of the throttle valve. It is therefore possible to improve the accuracy in the estimation of the temperature of the catalyst based on the opening degree of the throttle valve.

It is preferable that: the engine unit of the present teaching includes an oxygen sensor provided to the exhaust passage member and provided upstream of the catalyst in a flow direction of the exhaust gas, the oxygen sensor being configured to detect oxygen concentration in the exhaust gas in the exhaust passage member, the oxygen sensor positioned so that a volume of a third portion of the exhaust passage member, the third portion being from the exhaust port to the oxygen sensor, is smaller than a volume of a fourth portion of the exhaust passage member, the fourth portion being from the oxygen sensor to the atmosphere discharge port; and the controller is configured to control the fuel supply amount of the fuel supplier at least based on: the opening degree of the throttle valve positioned in the intake passage member so that the combustion-chamber-side volume is smaller; the engine rotation speed; and a signal from the oxygen sensor.

In this arrangement, the controller controls the fuel supply amount using a signal from the oxygen sensor, in addition to the opening degree of the throttle valve positioned in the intake passage member so that the combustion-chamber-side volume is smaller, and the signal from the engine rotation speed sensor. The oxygen sensor is provided to the exhaust passage member, and provided upstream of the catalyst. As described above, the volume of the first portion of the exhaust passage member, the first portion being from the exhaust port to the upstream end of the catalyst, is smaller than the volume of the second portion of the exhaust passage member, the second portion being from the downstream end of the catalyst to the atmosphere discharge port. Therefore, as a matter of course, the volume of the third portion of the exhaust passage member, the third portion being from the exhaust port to the oxygen sensor, is smaller than the volume of the fourth portion of the exhaust passage member, the fourth portion being from the oxygen sensor to the atmosphere discharge port. This enables the oxygen concentration of the exhaust gas detected by the oxygen sensor to approximate the oxygen concentration of the exhaust gas at the time of being discharged from the combustion chamber. It is therefore possible to improve the accuracy in the control of the fuel supply amount. That is, it is possible to control the fuel supply amount so that the air-fuel ratio of the air-fuel mixture is closer to a target air-fuel ratio. It is therefore possible to improve the accuracy in the estimation of the temperature of the catalyst by estimating the temperature of the catalyst based on: the throttle opening degree; the engine rotation speed; and the target air-fuel ratio.

Brief Description of the Drawings

[FIG. 1] FIG. 1 is a left side view of a motorcycle in which an engine unit of an embodiment is used.
[FIG. 2] FIG. 2 is a schematic diagram of the engine unit.
[FIG. 3] FIG. 3 is a schematic cross-section of a muffler.
[FIG. 4] FIG. 4 is a control block diagram of the engine unit.
[FIG. 5] FIG. 5 is a diagram illustrating the relationship between the throttle opening degree, the engine rotation speed, and steady-state estimated catalyst temperature.
[FIG. 6] FIG. 6 is a graph showing an example of corrected steady-state estimated catalyst temperature and estimated catalyst temperature.
[FIG. 7] FIG. 7 is a map illustrating the relationship between the throttle opening degree, the engine rotation speed, and an increment correction area.

Description of Embodiments

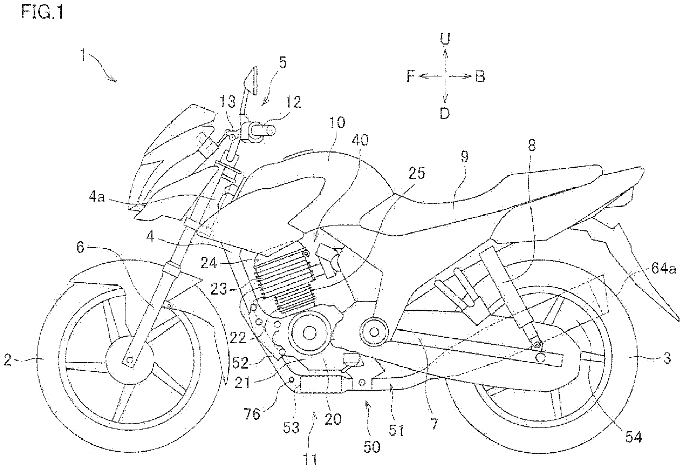

The following describes an embodiment of the present teaching. This embodiment deals with an example of a motorcycle in which the engine unit of the present teaching is used. In the following description, a front-back direction refers to a vehicle's front-back direction as seen from a rider seated on a seat 9 of a motorcycle 1. The seat 9 is described later. A left-right direction refers to a vehicle's left-right direction as seen from the rider seated on the seat 9. The vehicle's left-right direction is the same as a vehicle's width direction. Arrows F and B in FIG. 1 respectively indicate a forward direction and a backward direction. Arrows U and D respectively indicate an upward direction and a downward direction.

[Overall Structure of Motorcycle]

As shown in FIG. 1, the motorcycle 1 of this embodiment includes a front wheel 2, a rear wheel 3, and a vehicle body frame 4. The vehicle body frame 4 has, at its front portion, a head pipe 4a. A steering shaft (not illustrated) is inserted into the head pipe 4a in a rotatable manner. An upper end portion of the steering shaft is coupled to a handle unit 5. Upper end portions of a pair of front forks 6 are secured to the handle unit 5. Lower end portions of the front forks 6 support the front wheel 2.

The handle unit 5 is provided with a right grip (not illustrated) and a left grip 12. The right grip is a throttle grip configured to adjust engine power. Moreover, a brake lever 13 is provided in front of the left grip 12.

A pair of swingarms 7 are supported by the vehicle body frame 4 in a swingable manner. Rear end portions of the swingarms 7 support the rear wheel 3. Rear suspensions 8 are respectively attached to the swingarms 7. One end portion of each suspension 8 is connected to a portion of the corresponding swingarm 7, the portion being rearward of the swingarm pivot. The other end portion of each rear suspension 8 is attached to the vehicle body frame 4.

The seat 9 and a fuel tank 10 are supported by an upper portion of the vehicle body frame 4. The fuel tank 10 is in front of the seat 9. Furthermore, an engine unit 11 is mounted on the vehicle body frame 4. The engine unit 11 is provided below the fuel tank 10. Furthermore, a battery (not illustrated) is mounted on the vehicle body frame 4. The battery is configured to supply electrical power to electronic equipment such as various types of sensors.

[Structure of Engine Unit]

The engine unit 11 is a natural air-cooled engine. The engine unit 11 is a four-stroke single-cylinder engine. The four-stroke engine is structured so that an engine cycle constituted by the intake stroke, the compression stroke, the combustion (expansion) stroke, and the exhaust stroke is repeated. The engine unit 11 includes: an engine main body 20; an intake unit 40; and an exhaust unit 50.

The engine main body 20 includes a crankcase 21, a cylinder body 22, a cylinder head 23, and a head cover 24. The cylinder body 22 is attached to an upper end portion of the crankcase 21. The cylinder head 23 is attached to an upper end portion of the cylinder body 22. The head cover 24 is attached to an upper end portion of the cylinder head 23.

A fin portion 25 is provided on at least a part of a surface of the engine main body 20. The fin portion 25 ranges over the cylinder body 22 and the cylinder head 23. The fin portion 25 consists of a plurality of fins. Each of the fins projects from the surface of the engine main body 20. The fin portion 25 is provided throughout the substantially entire circumferences of the cylinder body 22 and the cylinder head 23. The fin portion 25 is configured to dissipate heat generated in the engine main body 20.

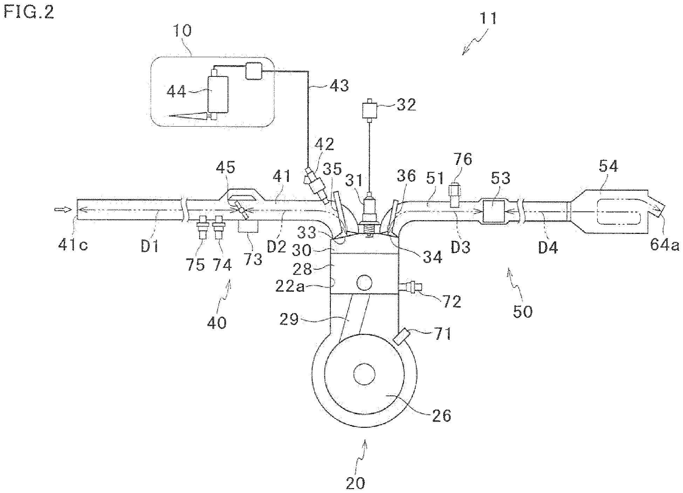

FIG. 2 is a schematic diagram illustrating the engine unit 11. As shown in FIG. 2, the crankcase 21 accommodates therein a crankshaft 26, a starter motor (not illustrated), a gearbox (not illustrated), a generator (not illustrated), and the like. The gearbox is configured to change the ratio between the rotation speed of the crankshaft 26 and the rotation speed of the rear wheel 3. Rotation of the crankshaft 26 is transmitted to the rear wheel 3 via the gearbox. The starter motor rotates the crankshaft 26 at the time of engine start-up. The starter motor is powered by the battery (not illustrated). The generator is configured to generate electrical power with the use of the rotation of the crankshaft 26. The battery is charged with electricity generated by the generator. Instead of the starter motor and the generator, an Integrated Starter Generator (ISG) may be provided. The ISG is a device in which the starter motor and the generator are integrated.

An engine rotation speed sensor 71 is provided in the crankcase 21. The engine rotation speed sensor 71 is configured to detect the rotation speed of the crankshaft 26, i.e., engine rotation speed. The engine rotation speed is the number of rotations of the crankshaft 26 per unit time.

The cylinder body 22 has a cylinder hole 22a. A piston 28 is provided in the cylinder hole 22a in a slidable manner. The piston 28 is coupled to the crankshaft 26 via a connecting rod 29. An engine temperature sensor 72 is provided to the engine main body 20. The engine temperature sensor 72 is configured to detect the temperature of the engine main body 20. Specifically, the engine temperature sensor 72 is configured to detect the temperature of the cylinder body 22.

The combustion chamber 30 (see FIG. 2) is formed by: an under surface of the cylinder head 23; the cylinder hole 22a; and the piston 28. A leading end portion of a spark plug 31 is in the combustion chamber 30. The spark plug 31 produces, from its leading end portion, an electrical spark. The spark discharge ignites the air-fuel mixture in the combustion chamber 30. The spark plug 31 is wired to an ignition coil 32. The ignition coil 32 stores electrical power to enable the spark discharge from the spark plug 31.

An intake port 33 and an exhaust port 34 are provided through the surface of the cylinder head 23, the surface forming the combustion chamber 30. That is, the intake port 33 and the exhaust port 34 are provided through the combustion chamber 30. The intake port 33 is opened/closed by an intake valve 35. The exhaust port 34 is opened/closed by an exhaust valve 36. The intake valve 35 and the exhaust valve 36 are actuated by a valve moving device (not illustrated) housed in the cylinder head 23. The valve moving device operates in association with the crankshaft 26.

The engine unit 11 includes an intake passage member 41 connecting the intake port 33 with an atmosphere suction port 41 a exposed to the atmosphere. Herein, the "passage member" means a wall structure or the like that is around a path and forms therein the path. The path means a space through which an object passes. Air is taken in from the atmosphere through the atmosphere suction port 41a. The air, taken in through the atmosphere suction port 41 a, flows inside the intake passage member 41 towards the intake port 33. A part of the intake passage member 41 is included in the engine main body 20, and the remaining part of the intake passage member 41 is included in the intake unit 40. The intake unit 40 includes an intake pipe connected to the engine main body 20. The intake unit 40 further includes an injector 42 and a throttle valve 45. In the following description, upstream and downstream in the direction of airflow in the intake passage member 41 may be simply referred to as upstream and downstream, respectively.

The engine unit 11 includes an exhaust passage member 51 connecting the exhaust port 34 with an atmosphere discharge port 64a exposed to the atmosphere. Combustion gas generated in the combustion chamber 30 is discharged to the exhaust passage member 51 via the exhaust port 34. The combustion gas discharged from the combustion chamber 30 is referred to as exhaust gas. Exhaust gas flows inside the exhaust passage member 51 towards the atmosphere discharge port 64a. A part of the exhaust passage member 51 is included in the engine main body 20, and the remaining part of the exhaust passage member 51 is included in the exhaust unit 50. The exhaust unit 50 includes an exhaust pipe 52 (see FIG. 1) connected to the engine main body 20. The exhaust unit 50 further includes a catalyst 53 and a muffler 54. The muffler 54 is a device configured to reduce the amount of noise made by the exhaust gas. In the following description, upstream and downstream in the direction of flow of the exhaust gas in the exhaust passage member 51 may be simply referred to as upstream and downstream, respectively.

The injector 42 is provided to the intake passage member 41. The injector 42 is configured to inject fuel to the air taken in through the atmosphere suction port 41 a. To be more specific, the injector 42 is configured to inject fuel to the air in the intake passage member 41. The injector 42 is equivalent to a fuel supplier in the present teaching. The injector 42 is connected to a fuel hose 43, which is connected to the fuel tank 10. A fuel pump 44 is provided in the fuel tank 10. The fuel pump 44 is configured to feed fuel from the fuel tank 10 to the fuel hose 43 under pressure.

The throttle valve 45 is provided in the intake passage member 41. The throttle valve 45 is provided upstream of the injector 42. The volume of a portion of the intake passage member 41, which is from the atmosphere suction port 41 a to the throttle valve 45, is called an atmosphere-side volume V1. The volume of a portion of the intake passage member 41, which is from the throttle valve 45 to the intake port 33, is called a combustion-chamber-side volume V2. The combustion-chamber-side volume V2 is smaller than the atmosphere-side volume V1. The path formed inside the intake passage member 41 is referred to as an intake path. A path length of a freely-selected portion of the intake passage member 41 means the length of the path formed in the freely-selected portion. As shown in FIG. 2, a path length of the portion of the intake passage member 41, which is from the atmosphere suction port 41 a to the throttle valve 45, is called a path length D1. A path length of the portion of the intake passage member 41, which is from the throttle valve 45 to the intake port 33, is called a path length D2. The path length D2 is shorter than the path length D1. That is, the throttle valve 45 is close to the combustion chamber 30.

The throttle valve 45 is connected to the throttle grip (not illustrated) by a throttle wire. The opening degree of the throttle valve 45 is changed as the rider rotates the throttle grip. The engine unit 11 includes a throttle position sensor 73 configured to detect the opening degree of the throttle valve 45. Hereinafter, the opening degree of the throttle valve 45 is referred to as a "throttle opening degree". The throttle position sensor 73 is configured to detect the position of the throttle valve 45, and to output a signal indicating the detected position, i.e., the throttle opening degree.

An intake pressure sensor 74 and an intake temperature sensor 75 are provided to the intake passage member 41. The intake pressure sensor 74 is configured to detect the internal pressure in the intake passage member 41. The internal pressure in the intake passage member 41 is called intake pressure. The intake temperature sensor 75 is configured to detect the temperature of air in the intake passage member 41. The temperature of air in the intake passage member 41 is called intake temperature.

The catalyst 53 is provided in the exhaust passage member 51. The catalyst 53 is provided in the exhaust pipe 52 of the exhaust unit 50 (see FIG. 1). The volume of a portion of the exhaust passage member 51, which is from the exhaust port 34 to the upstream end of the catalyst 53, is called a volume V3. The volume of a portion of the exhaust passage member 51, which is from the downstream end of the catalyst 53 to the atmosphere discharge port 64a, is called a volume V4. The volume V3 is smaller than the volume V4. The path formed inside the exhaust passage member 51 is referred to as an exhaust path. A path length of a freely-selected portion of the exhaust passage member 51 means the length of the path formed in the freely-selected portion. As shown in FIG. 2, a path length of the portion of the exhaust passage member 51, which is from the exhaust port 34 to an upstream end of the catalyst 53, is called a path length D3. A path length of the portion of the exhaust passage member 51, which is from the downstream end of the catalyst 53 to the atmosphere discharge port 64a, is called a path length D4. The path length D3 is shorter than the path length D4. That is, the catalyst 53 is close to the combustion chamber 30. As shown in FIG. 1, the catalyst 53 is disposed below the engine main body 20.

The catalyst 53 is a three-way catalyst. The three-way catalyst is configured to convert three substances contained in the exhaust gas: hydrocarbon (HC), carbon monoxide (CO), and nitrogen oxide (NOx), by oxidation or reduction. The catalyst 53 does not have to be the three-way catalyst, and may be configured to convert one or two of the three substances of hydrocarbon, carbon monoxide, and nitrogen oxide. The catalyst 53 does not have to be an oxidation-reduction catalyst. The catalyst 53 may be an oxidation catalyst or a reduction catalyst, which is configured to convert harmful substances by either oxidation or reduction. The catalyst 53 includes a base material to which one or more noble metals having a function of purifying exhaust gas are attached. The catalyst 53 in this embodiment is a catalyst including a metal base material. Alternatively, the catalyst 53 may be a catalyst including a ceramic base material.

An oxygen sensor 76 is provided to the exhaust passage member 51. The oxygen sensor 76 is provided upstream of the catalyst 53. The volume of a portion of the exhaust passage member 51, which is from the exhaust port 34 to oxygen sensor 76, is called a volume V3a. The volume of a portion of the exhaust passage member 51, which is from the oxygen sensor 76 to the upstream end of the catalyst 53, is called a volume V3b. The volume V3a is larger than the volume V3b. A path length of the portion of the exhaust passage member 51, which is from the exhaust port 34 to the oxygen sensor 76, is called a path length D3a. A path length of the portion of the exhaust passage member 51, which is from the oxygen sensor 76 to the upstream end of the catalyst 53, is called a path length D3b. The path length D3b is shorter than the path length D3a. That is, the oxygen sensor 76 is close to the catalyst 53.

The oxygen sensor 76 is configured to detect oxygen concentration in the exhaust gas. The oxygen sensor 76 is configured to output a voltage signal indicating the level of the oxygen concentration in the exhaust gas. Specifically, the oxygen sensor 76 is configured to output a high voltage level signal when the air-fuel ratio of the air-fuel mixture is rich, and to output a low voltage level signal when the air-fuel ratio of the air-fuel mixture is lean. "Rich" means that excess fuel is contained in the mixture with respect to a target air-fuel ratio. "Lean" means that excess air is contained in the mixture with respect to the target air-fuel ratio. That is, the reading by the oxygen sensor 76 shows whether the air-fuel ratio of the air-fuel mixture is rich or lean. The oxygen sensor 76 includes a sensor element formed by a solid electrolyte mainly containing zirconia. The sensor element is activated when heated to a high temperature, which enables the oxygen sensor 76 to detect the oxygen concentration. The oxygen sensor 76 may be a linear air/fuel ratio sensor ("linear A/F sensor") configured to output a linear detection signal proportionally to the oxygen concentration in the exhaust gas. The linear A/F sensor is configured to continuously detect the change of the oxygen concentration in the exhaust gas.

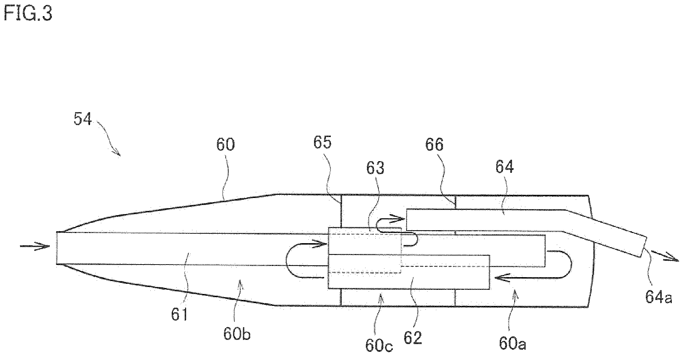

The muffler 54 is provided to the exhaust passage member 51. The muffler 54 is provided downstream of the catalyst 53. As shown in FIG. 3, the muffler 54 includes an external cylinder 60, three pipes 61 to 63 housed in the external cylinder 60, and a tail pipe 64. The inside of the external cylinder 60 is divided into three expansion chambers 60a, 60b, and 60c by two separators 65 and 66. One end of the first pipe 61 is connected to the exhaust pipe 52 (see FIG. 1). The first pipe 61 is inserted through the inside of the third pipe 63 passing through the separator 65. There is a gap between an outer circumferential surface of the first pipe 61 and an inner circumferential surface of the third pipe 63. The first pipe 61 passes through the two separators 65 and 66. The other end of the first pipe 61 is in the first expansion chamber 60a. The second pipe 62 passes through the two separators 65 and 66. The second pipe 62 allows the first expansion chamber 60a to communicate with the second expansion chamber 60b. The third pipe 63 allows the second expansion chamber 60b to communicate with the third expansion chamber 60c. The tail pipe 64 allows the third expansion chamber 60c to communicate with the space outside the external cylinder 60. An end portion of the tail pipe 64 is exposed to the space outside the external cylinder 60. The end of the tail pipe 64 is the atmosphere discharge port 64a. In the muffler 54, a path for the exhaust gas is formed, along which the exhaust gas flows in the following order: the first pipe 61, the first expansion chamber 60a, the second pipe 62, the second expansion chamber 60b, the gap between the third pipe 63 and the first pipe 61, the third expansion chamber 60c, and the tail pipe 64. The length of the path formed in the muffler 54 is longer than the maximum length of the muffler 54. A sound absorbing material such as glass wool may or may not be provided between the inner surface of the external cylinder 60 and the outer surfaces of the pipes 61 to 64. The internal structure of the muffler 54 is not limited to the structure shown in the schematic diagram of FIG. 3.

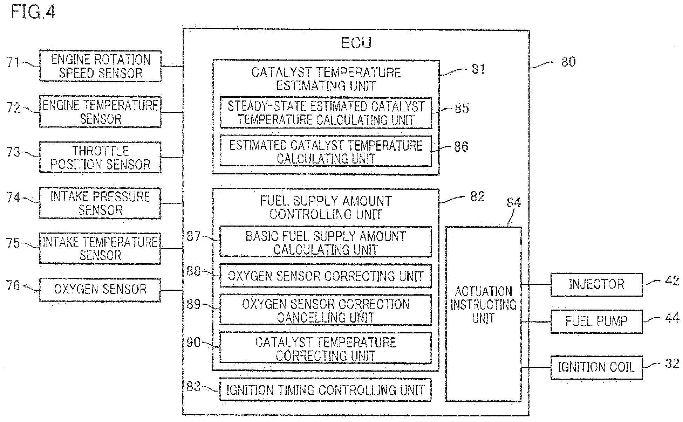

As shown in FIG. 4, the engine unit 11 includes an ECU (Electronic Control Unit) 80 configured to control the operation of the engine unit 11. The ECU 80 is equivalent to a controller in the present teaching. The ECU 80 is connected to various types of sensors such as the engine rotation speed sensor 71, the engine temperature sensor 72, the throttle position sensor 73, the intake pressure sensor 74, the intake temperature sensor 75, and the oxygen sensor 76. Signals from the various types of sensors are input to the ECU 80. The ECU 80 is also connected to the ignition coil 32, the injector 42, the fuel pump 44, and the like.

The ECU 80 comprises a CPU (central processing unit), a ROM (read-only memory), a RAM (random-access memory), and the like. The CPU executes information processing based on programs and various types of data stored in the ROM and the RAM. In this way, the ECU 80 implements respective functions of function processors. As shown in FIG. 4, the ECU 80 includes the function processors such as a catalyst temperature estimating unit 81, a fuel supply amount controlling unit 82, and an ignition timing controlling unit 83. The ECU 80 further includes an actuation instructing unit 84. The actuation instructing unit 84 is configured to transmit an actuation instruction signal to the ignition coil 32, the injector 42, the fuel pump 44, or the like, based on the result of the information processing by the function processors. The ignition timing controlling unit 83 is configured to control the ignition timing based on signals from the sensors 71 to 76. The ignition timing is the timing at which the spark plug 31 produces an electrical spark. The following describes the details of the catalyst temperature estimating unit 81 and the fuel supply amount controlling unit 82.

The catalyst temperature estimating unit 81 is configured to estimate the temperature of the catalyst 53 based on the opening degree of the throttle valve 45 and based on the engine rotation speed. That is, the catalyst temperature estimating unit 81 is configured to estimate the temperature of the catalyst 53 based on a signal from the throttle position sensor 73 and based on a signal from the engine rotation speed sensor 71. The catalyst temperature estimating unit 81 is configured to estimate the temperature of the catalyst 53 in predetermined cycles. The "predetermined cycles" may be, but not limited to, temporal cycles (i.e., at predetermined time intervals). The catalyst temperature estimating unit 81 includes a steady-state estimated catalyst temperature calculating unit 85 and an estimated catalyst temperature calculating unit 86.

The steady-state estimated catalyst temperature calculating unit 85 is configured to calculate a steady-state estimated catalyst temperature Ea based on the signal from the throttle position sensor 73 and based on the signal from the engine rotation speed sensor 71. The steady-state estimated catalyst temperature Ea is an estimated temperature value of the catalyst 53 in a steady operation state. The steady operation state is an operation state in which the engine unit is in steady state operation, i.e., the engine unit runs at a constant engine rotation speed and at a constant throttle opening degree. In the steady operation state, the temperature of the catalyst 53 is also constant. Furthermore, in the steady operation state, the fuel supply amount is a basic fuel supply amount, which is described later.

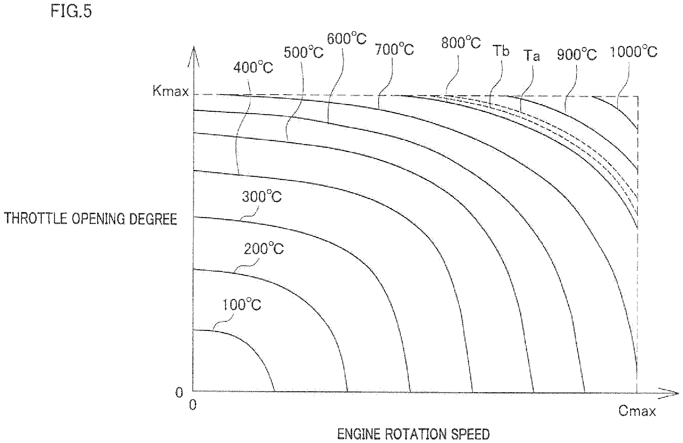

The steady-state estimated catalyst temperature calculating unit 85 obtains the steady-state estimated catalyst temperature Ea using a map shown in FIG. 5. The map of FIG. 5 is a map for the steady-state estimated catalyst temperature Ea associated with the throttle opening degree and with the engine rotation speed. This map is stored in the ROM. This map is prepared, for example, based on temperature values of the catalyst 53 actually measured during steady state operation. However, as for a low load range and a low rotation speed range in which the steady state operation is not feasible, values interpolated based on the measured values are used. In FIG. 5, Cmax represents the upper limit value of the engine rotation speed, while Kmax represents the upper limit value of the throttle opening degree.

The estimated catalyst temperature calculating unit 86 is configured to correct the steady-state estimated catalyst temperature Ea calculated by the steady-state estimated catalyst temperature calculating unit 85, thereby to calculate an estimated catalyst temperature Ed. The estimated catalyst temperature Ed is an estimated value of the temperature of the catalyst 53 under the current situation.

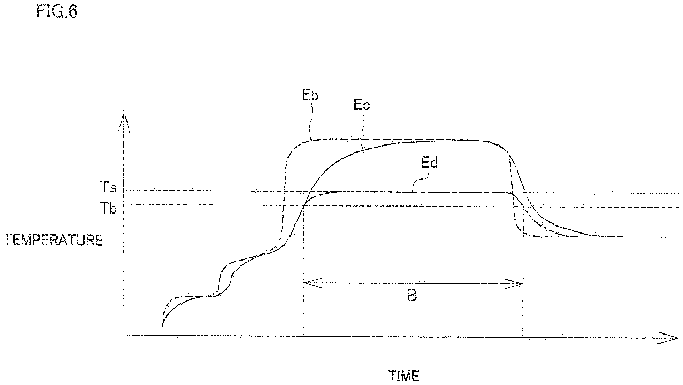

The estimated catalyst temperature calculating unit 86 corrects, at first, the steady-state estimated catalyst temperature Ea based on the ignition timing, the atmospheric pressure, the outside temperature, the intake temperature, the air-fuel ratio, and the like. The estimated catalyst temperature calculating unit 86 corrects the steady-state estimated catalyst temperature Ea to calculate a corrected steady-state estimated catalyst temperature Eb. In FIG. 6, the bold broken line indicates an example of the corrected steady-state estimated catalyst temperature Eb.

The estimated catalyst temperature calculating unit 86 corrects the corrected steady-state estimated catalyst temperature Eb based on the signal from the throttle position sensor 73 and based on the signal from the engine rotation speed sensor 71. The estimated catalyst temperature calculating unit 86 corrects the corrected steady-state estimated catalyst temperature Eb to calculate a delay-corrected estimated catalyst temperature Ec. Thus, it can be said that the estimated catalyst temperature calculating unit 86 corrects the steady-state estimated catalyst temperature Ea based on: the signal from the throttle position sensor 73; the signal from the engine rotation speed sensor 71; and the like. The following describes the details of the correction to the corrected steady-state estimated catalyst temperature Eb. The estimated catalyst temperature calculating unit 86 calculates a smoothing coefficient C based on: the signal from the throttle position sensor 73; the signal from the engine rotation speed sensor 71; and the like. Then, the estimated catalyst temperature calculating unit 86 calculates the delay-corrected estimated catalyst temperature Ec using the smoothing coefficient C and the below-described equation, for example. It should be noted that the method of calculating the smoothing coefficient C is not limited to the above.

$$\text{Delay-corrected estimated catalyst temperature Ec} = \text{Delay-corrected estimated catalyst temperature Ec calculated last time} + (\text{Corrected steady-state estimated catalyst temperature Eb} - \text{Delay-corrected estimated catalyst temperature Ec calculated last time}) / \text{Smoothing coefficient C.}$$

When calculating the delay-corrected estimated catalyst temperature Ec first time after the startup of the engine unit 11, there is no "delay-corrected estimated catalyst temperature Ec calculated last time". In this case, as the "delay-corrected estimated catalyst temperature Ec calculated last time", the value of the intake temperature, calculated based on the signal from the intake temperature sensor 75, is used. Alternatively, as the "delay-corrected estimated catalyst temperature Ec calculated last time", the value of the engine temperature, detected by the engine temperature sensor 72, is used.

In FIG. 6, the bold solid line indicates the delay-corrected estimated catalyst temperature Ec. The delay-corrected estimated catalyst temperature Ec in FIG. 6 is calculated by correcting the corrected steady-state estimated catalyst temperature Eb indicated with the bold broken line, using the smoothing coefficient C. When the engine unit is not in the steady operation state, the actual temperature of the catalyst 53 will follow the corrected steady-state estimated catalyst temperature Eb and the steady-state estimated catalyst temperature Ea with delays. To deal with this, the correction is made using the smoothing coefficient C calculated based on the throttle opening degree and the engine rotation speed. This allows the delay-corrected estimated catalyst temperature Ec to follow the corrected steady-state estimated catalyst temperature Eb and the steady-state estimated catalyst temperature Ea with delays.

The estimated catalyst temperature calculating unit 86 corrects the calculated delay-corrected estimated catalyst temperature Ec using the fuel supply amount to calculate the estimated catalyst temperature Ed. To be more specific, the above correction is made based on the difference between the fuel supply amount and the basic fuel supply amount used to calculate the fuel supply amount. The details of the basic fuel supply amount calculating unit are described later. When the fuel supply amount is equal to the basic fuel supply amount, the estimated catalyst temperature Ed is determined as being equal to the delay-corrected estimated catalyst temperature Ec. In FIG. 6, the bold dashed line indicates the estimated catalyst temperature Ed. The estimated catalyst temperature Ed in FIG. 6 is calculated by correcting the delay-corrected estimated catalyst temperature Ec indicated with the bold solid line, using the fuel supply amount. In a period B in FIG. 6, the fuel supply amount is greater than the basic fuel supply amount. In periods other than the period B in FIG. 6, the fuel supply amount is equal to the basic fuel supply amount. Because of this, in the period before the period B in FIG. 6, the estimated catalyst temperature Ed is equal to the delay-corrected estimated catalyst temperature Ec.

As described above, the estimated catalyst temperature calculating unit 86 corrects the steady-state estimated catalyst temperature Ea based on the fuel supply amount, the ignition timing, the atmospheric pressure, the outside temperature, the intake temperature, the air-fuel ratio, and the like. The heat quantity of the exhaust gas having flowed into the catalyst 53 changes with the change in the fuel supply amount, the ignition timing, the atmospheric pressure, the outside temperature, the intake temperature, the air-fuel ratio, and the like. Accordingly, the correction to the steady-state estimated catalyst temperature Ea based on the above-mentioned factors allows the estimated catalyst temperature Ed to approximate the actual temperature of the catalyst 53.

The fuel supply amount controlling unit 82 is configured to determine the fuel supply amount of the injector 42. The fuel supply amount is the fuel injection amount in this embodiment. To be more specific, the fuel supply amount controlling unit 82 controls the length of time during which the injector 42 injects fuel. To enhance the combustion efficiency and the purification efficiency by the catalyst 53, it is preferable that the air-fuel ratio of the air-fuel mixture is equal to the stoichiometric air-fuel ratio. The fuel supply amount controlling unit 82 increases or decreases the fuel supply amount as needed.

The fuel supply amount controlling unit 82 includes a basic fuel supply amount calculating unit 87, an oxygen sensor correcting unit 88, an oxygen sensor correction cancelling unit 89, and a catalyst temperature correcting unit 90.

The basic fuel supply amount calculating unit 87 calculates the basic fuel supply amount based on signals from the engine rotation speed sensor 71, the intake pressure sensor 74, and the throttle position sensor 73. To be more specific, at first, the basic fuel supply amount calculating unit 87 obtains the intake air amount using an intake air amount map. There are two intake air amount maps. The first one of the maps is a map in which the intake air amount is associated with the throttle opening degree and with the engine rotation speed. The second one of the maps is a map in which the intake air amount is associated with the intake pressure and with the engine rotation speed. These maps are stored in the ROM. When the throttle opening degree is less than a predetermined value, the second map is used, in which the intake air amount is associated with the intake pressure and with the engine rotation speed. Meanwhile, when the throttle opening degree is equal to or greater than the predetermined value, the first map is used, in which the intake air amount is associated with the throttle opening degree and with the engine rotation speed. Based on the intake air amount obtained from either one of the intake air amount maps, the basic fuel supply amount calculating unit 87 calculates the basic fuel supply amount with which a target air-fuel ratio is achieved.

The oxygen sensor correcting unit 88 is configured to correct the basic fuel supply amount based on a signal from the oxygen sensor 76. To be more specific, when the signal from the oxygen sensor 76 indicates that the mixture is lean, the oxygen sensor correcting unit 88 corrects the basic fuel supply amount so that the amount of fuel supplied next increases. Meanwhile, when the signal from the oxygen sensor 76 indicates that the mixture is rich, the oxygen sensor correcting unit 88 corrects the basic fuel supply amount so that the amount of fuel supplied next decreases.

The oxygen sensor correction cancelling unit 89 is configured to temporarily cancel the correction to the basic fuel supply amount made by the oxygen sensor correcting unit 88, when a predetermined cancel condition is satisfied. The cancel condition includes the condition that the basic fuel supply amount has been corrected by the catalyst temperature correcting unit 90. That is, when no correction is made to the basic fuel supply amount by the catalyst temperature correcting unit 90, the correction to the basic fuel supply amount by the oxygen sensor correcting unit 88 is not cancelled, but maintained. Now, the cancellation of the correction by the oxygen sensor correction cancelling unit 89 is made by conducting the following process: stopping the arithmetic processing by the oxygen sensor correcting unit 88 and undoing the correction to the basic fuel supply amount by the oxygen sensor correcting unit 88.

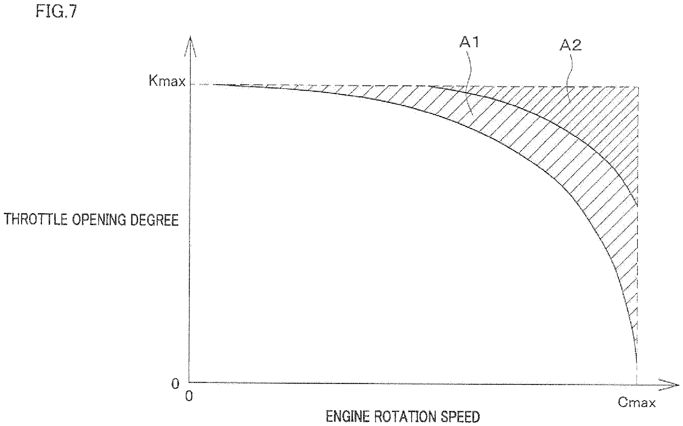

The catalyst temperature correcting unit 90 is configured to correct the basic fuel supply amount based on the estimated catalyst temperature Ed calculated by the catalyst temperature estimating unit 81. The catalyst temperature correcting unit 90 determines, at first, whether the estimated catalyst temperature Ed is not less than a predetermined fuel amount increasing temperature Tb. When the estimated catalyst temperature Ed is less than the fuel amount increasing temperature Tb, the catalyst temperature correcting unit 90 does not correct the basic fuel supply amount. When the estimated catalyst temperature Ed is equal to or greater than the fuel amount increasing temperature Tb, the catalyst temperature correcting unit 90 corrects the basic fuel supply amount so as to increase the fuel amount. At this time, the catalyst temperature correcting unit 90 corrects the basic fuel supply amount based on the signal from the throttle position sensor 73 and based on the signal from the engine rotation speed sensor 71. To be more specific, the basic fuel supply amount is corrected using a map shown in FIG. 7. The map of FIG. 7 is a map for increment correction areas A1 and A2 associated with the throttle opening degree and the engine rotation speed. When the point indicated by the value of the throttle opening degree and the value of the engine rotation speed is in the increment correction area A1, the basic fuel supply amount is corrected so as to be increased by 10 percent. When the point indicated by the value of the throttle opening degree and the value of the engine rotation speed is in the increment correction area A2, the basic fuel supply amount is corrected so as to be increased by 20 percent.

The fuel supply amount controlling unit 82 may include one or more correction units configured to correct the basic fuel supply amount, other than the oxygen sensor correcting unit 88 and the catalyst temperature correcting unit 90. For example, the fuel supply amount controlling unit 82 may include a correction unit configured to correct the basic fuel supply amount based on the intake temperature, the engine temperature, the outside temperature, the atmospheric pressure, and/or the like. Alternatively, the fuel supply amount controlling unit 82 may include a correction unit configured to correct the basic fuel supply amount in accordance with transient characteristics at the time of acceleration/deceleration.

The fuel supply amount controlling unit 82 calculates the fuel supply amount through the correction to the basic fuel supply amount by the oxygen sensor correcting unit 88 or by the catalyst temperature correcting unit 90. When the fuel supply amount controlling unit 82 includes one or more correction units other than the oxygen sensor correcting unit 88 and the catalyst temperature correcting unit 90, the fuel supply amount controlling unit 82 calculates the fuel supply amount further through the correction to the basic fuel supply amount by the one or more correction units. The actuation instructing unit 84 actuates the fuel pump 44 and the injector 42 in accordance with the calculated fuel supply amount.

As the fuel supply amount increases, the heat of vaporization of fuel supplied from the injector 42 increases therewith. This reduces the heat quantity of the exhaust gas, thereby to reduce the temperature of the catalyst 53. Furthermore, the increase of the fuel supply amount reduces the oxygen concentration in the exhaust gas. The reduction of the oxygen concentration in the exhaust gas decreases the chemical reaction in the catalyst 53, which reduces the temperature of the catalyst 53. In the present embodiment, the fuel supply amount is increased, or control is made so that the fuel supply amount increases, when the estimated catalyst temperature Ed is equal to or higher than the fuel amount increasing temperature Tb. This arrangement reduces the temperature of the catalyst 53, to prevent the deterioration of the catalyst 53 due to excessive heating. As a result, the exhaust gas purification performance of the catalyst 53 can be maintained. The increment correction areas A1 and A2 in FIG. 7 and the correction values associated therewith are set so that the temperature of the catalyst 53 does not exceed a predetermined upper limit temperature Ta during steady state operation. The upper limit temperature Ta is higher than the fuel amount increasing temperature Tb. The upper limit temperature Ta is set so as to be lower than the temperature at which the catalyst 53 starts to deteriorate due to heat. In FIG. 6, when the fuel supply amount is larger than the basic fuel supply amount, the estimated catalyst temperature Ed completely matches the upper limit temperature Ta; however, in some cases, the estimated catalyst temperature Ed does not match the upper limit temperature Ta. For example, under a high outside temperature and/or intake temperature condition, or under a high atmospheric pressure condition, the corrected steady-state estimated catalyst temperature Eb may be slightly higher than the steady-state estimated catalyst temperature Ea. In such a case, the estimated catalyst temperature Ed is slightly higher than the upper limit temperature Ta when the fuel supply amount is larger than the basic fuel supply amount. Meanwhile, under a low outside temperature condition, for example, the estimated catalyst temperature Ed may be slightly lower than the upper limit temperature Ta when the fuel supply amount is larger than the basic fuel supply amount.

The engine unit 11 of the present embodiment has the following characteristics.

Signals from the throttle position sensor 73 and the engine rotation speed sensor 71 are input to the ECU 80 configured to control the fuel supply amount of the injector 42. The number of throttle valves 45 provided for one combustion chamber 30 is at least one. The combustion-chamber-side volume V2 is smaller than the atmosphere-side volume V1. The atmosphere-side volume V1 is the volume of the portion of the intake passage member 41, which is from the atmosphere suction port 41a to the throttle valve 45. The combustion-chamber-side volume V2 is the volume of the portion of the intake passage member 41, which is from the throttle valve 45 to the intake port 33. In addition to the above, the ECU 80 is configured to control the fuel supply amount of the injector 42 and to estimate the temperature of the catalyst 53, based on the opening degree of the throttle valve 45 positioned so that the combustion-chamber-side volume V2 is smaller and based on the engine rotation speed. Due to this, there is less delay in the change of the amount of air taken into the combustion chamber 30, in relation to the change in the opening degree of the throttle valve 45. That is, there is less delay in the change of the combustion in the combustion chamber 30, in relation to the change in the opening degree of the throttle valve 45. Consequently, there is less delay in the change of the temperature of the exhaust gas having reached the catalyst 53, in relation to the change in the opening degree of the throttle valve 45. As a result, even when the operation state of the engine unit 11 is the acceleration state or the deceleration state, it is possible to estimate the temperature of the catalyst 53 with higher accuracy, using simple control. The larger the opening degree of the throttle valve 45 is, the higher the degree of correlation between the opening degree of the throttle valve 45 and the intake air amount is. In other words, the higher the engine load is, the higher the degree of the above correlation is. For the above reason, it is possible to improve the accuracy in the estimation of the temperature of the catalyst 53 for a high-load range, by calculating the estimated catalyst temperature Ed based on the opening degree of the throttle valve 45 positioned so that the combustion-chamber-side volume V2 is smaller and based on the engine rotation speed. That is, it is possible to improve the accuracy in the estimation of the temperature of the catalyst 53 under situations in which the catalyst 53 has a high temperature.

The steady-state estimated catalyst temperature calculating unit 85 calculates the steady-state estimated catalyst temperature Ea, which is an estimated temperature value of the catalyst 53 in the steady operation state. The estimated catalyst temperature calculating unit 86 corrects the steady-state estimated catalyst temperature calculated by the steady-state estimated catalyst temperature calculating unit 85 based on information indicating the operation state of the engine unit 11, thereby to calculate the estimated catalyst temperature Ed. The steady-state estimated catalyst temperature calculating unit 85 calculates the steady-state estimated catalyst temperature Ea based on the opening degree of the throttle valve 45 positioned so that the combustion-chamber-side volume V2 is smaller and based on the engine rotation speed. Due to this, the temperature of the catalyst 53 in the steady operation state can be estimated, using simple control. It is therefore possible to estimate the temperature of the catalyst 53 with higher accuracy, using simple control.

The estimated catalyst temperature calculating unit 86 corrects the steady-state estimated catalyst temperature Ea at least based on the opening degree of the throttle valve 45 positioned so that the combustion-chamber-side volume V2 is smaller. It is therefore possible to estimate the temperature of the catalyst 53 with higher accuracy, using simple control. In addition to the above, the estimated catalyst temperature calculating unit 86 corrects the steady-state estimated catalyst temperature Ea at least based on the opening degree of the throttle valve 45 positioned so that the combustion-chamber-side volume V2 is smaller, and based on the engine rotation speed. It is therefore possible to improve the accuracy in the estimation of the temperature of the catalyst 53.

The catalyst 53 is positioned so that the volume V3 is smaller than the volume V4. The volume V3 is the volume of the portion of the exhaust passage member 51, which is from the exhaust port 34 to the catalyst 53. The volume V4 is the volume of the portion of the exhaust passage member 51, which is from the catalyst 53 to the atmosphere discharge port 64a. Thus, the above arrangement enables the temperature and the oxygen concentration of the exhaust gas having reached the catalyst 53 to approximate the temperature and the oxygen concentration of the exhaust gas at the time of being discharged from the engine main body 20. Consequently, there is less delay in the change of the temperature and the oxygen concentration of the exhaust gas having reached the catalyst 53, in relation to the change in the opening degree of the throttle valve 45. It is therefore possible to improve the accuracy in the estimation of the temperature of the catalyst 53 based on the opening degree of the throttle valve 45.

In the present embodiment, the fuel supply amount controlling unit 82 controls the fuel supply amount using the signal from the oxygen sensor 76, in addition to the signals from the throttle position sensor 73 and from the engine rotation speed sensor 71. The oxygen sensor 76 is provided to the exhaust passage member 51, and provided upstream of the catalyst 53. As described above, the catalyst 53 is provided so that the volume V3 is smaller than the volume V4. Therefore, as a matter of course, the volume of the portion of the exhaust passage member 51, which is from the exhaust port 34 to the oxygen sensor 76, is smaller than the volume of the portion of the exhaust passage member 51, which is from the oxygen sensor 76 to the atmosphere discharge port 64a. This enables the oxygen concentration of the exhaust gas detected by the oxygen sensor 76 to approximate the oxygen concentration of the exhaust gas at the time of being discharged from the combustion chamber 30. It is therefore possible to improve the accuracy in the control of the fuel supply amount. That is, it is possible to control the fuel supply amount so that the air-fuel ratio of the air-fuel mixture is closer to a target air-fuel ratio. The map of FIG. 5, in which the steady-state estimated catalyst temperature Ea is associated with the throttle opening degree and with the engine rotation speed, was prepared based on temperatures measured in a situation in which the air-fuel ratio of the air-fuel mixture is close to the target air-fuel ratio. As described above, it is possible to control the fuel supply amount so that the air-fuel ratio of the air-fuel mixture is closer to the target air-fuel ratio. It is therefore possible to improve the accuracy in the estimation of the temperature of the catalyst 53 conducted using the map of FIG. 5. That is to say, it is possible to improve the accuracy in the estimation of the temperature of the catalyst 53 by estimating the temperature based on: the throttle opening degree; the engine rotation speed; and the target air-fuel ratio.

A preferred embodiment of the present teaching has been described above. It should be noted that the present teaching is not limited to the above-described embodiment, and various changes can be made within the scope of the claims. Further, modifications described later may be used in combination as needed. It is noted that the term "preferable" used herein is non-exclusive and means "preferable but not limited to".

In the above-described embodiment, the two intake air amount maps are stored to be used by the basic fuel supply amount calculating unit 87 for the calculation of the basic fuel supply amount. In this regard, the basic fuel supply amount may be calculated in different ways. Only one of the above-mentioned two intake air amount maps may be stored to be used to calculate the basic fuel supply amount. Alternatively, instead of the intake air amount map(s), below-described one or more injection amount maps or injection time maps may be used to calculate the basic fuel injection amount. There can be two injection amount maps. The first one of the maps is a map in which the injection amount is associated with the throttle opening degree and with the engine rotation speed. The second one of the maps is a map in which the injection amount is associated with the intake pressure and with the engine rotation speed. At least one of the above-mentioned two injection amount maps may be stored, to be used to calculate the basic fuel supply amount. Similarly to the injection amount maps, there can be two injection time maps. At least one of the above-mentioned two injection time maps may be stored, to be used to calculate the basic fuel supply amount.

In the above-described embodiment, the catalyst temperature estimating unit 81 is configured to estimate the temperature of the catalyst 53 throughout the entire rotation-speed range for the engine rotation speed and throughout the entire opening-degree range for the throttle opening degree. However, the ranges for which the temperature of the catalyst 53 is estimated are not limited to these. For example, the catalyst temperature estimating unit 81 may be configured to estimate the temperature of the catalyst 53 when: the engine rotation speed is equal to or larger than a predetermined rotation speed; and the throttle opening degree is equal to or larger than a predetermined opening degree.

In the above-described embodiment, the steady-state estimated catalyst temperature Ea is corrected at first based on the ignition timing, the atmospheric pressure, and the like. Then, the correction using the smoothing coefficient C is made. Thereafter, the correction using the fuel supply amount is made, so that the estimated catalyst temperature Ed is calculated. However, the order of the corrections made to the steady-state estimated catalyst temperature Ea is not limited to the above order.

In the above-described embodiment, the estimated catalyst temperature calculating unit 86 corrects the steady-state estimated catalyst temperature Ea based on the fuel supply amount, the ignition timing, the atmospheric pressure, the outside temperature, the intake temperature, and the air-fuel ratio. However, the above corrections do not have to be made. That is, the estimated catalyst temperature Ed may be calculated using only the steady-state estimated catalyst temperature Ea and the smoothing coefficient C. Alternatively, the steady-state estimated catalyst temperature Ea may be corrected using only one or more of the above-mentioned correction items. Still alternatively, the steady-state estimated catalyst temperature Ea may be corrected using one or more correction items other than the above-mentioned correction items.

The estimated catalyst temperature calculating unit 86 corrects the steady-state estimated catalyst temperature Ea at least based on the signal from the throttle position sensor 73. However, the estimated catalyst temperature calculating unit 86 may correct the steady-state estimated catalyst temperature Ea based on information indicating the operation state of the engine unit 11 other than the signal from the throttle position sensor 73. The information indicating the operation state of the engine unit 11 includes, but not limited to, the engine rotation speed, the intake pressure, the ignition timing, the temperature of the coolant water, the temperature of the engine main body, the intake air amount, the fuel injection amount, the fuel injection time period, the atmospheric pressure, the intake temperature, the outside temperature, and the like.

In the above-described embodiment, the estimated catalyst temperature calculating unit 86 corrects the steady-state estimated catalyst temperature Ea based on the fuel supply amount. However, the above correction based on the fuel supply amount does not have to be made. In this case, the delay-corrected estimated catalyst temperature Ec is directly employed as the estimated catalyst temperature Ed.

In the above-described embodiment, the fuel supply amount is controlled using the estimated catalyst temperature Ed calculated by the catalyst temperature estimating unit 81. However, the method of controlling the fuel supply amount using the estimated catalyst temperature Ed is not limited to that described in the embodiment. In addition, the estimated catalyst temperature Ed may be used for control other than the control of the fuel supply amount, and for evaluation.

In the above-described embodiment, the correction to the basic fuel supply amount is not made by the oxygen sensor correcting unit 88 when the catalyst temperature correcting unit 90 corrects the basic fuel supply amount. However, in cases where a linear A/F sensor is used as the oxygen sensor 76, the basic fuel supply amount may be corrected by both of the catalyst temperature correcting unit 90 and the oxygen sensor correcting unit 88.

The engine main body 20 may include a knocking sensor configured to detect knocking occurring in the engine main body 20. In this case, the ignition timing controlling unit 83 may control the ignition timing based on a signal from the knocking sensor. To be more specific, the ignition timing controlling unit 83 may be configured to retard the ignition timing when knocking is detected, and to advance the ignition timing when knocking is not detected.

In the above-described embodiment, the oxygen sensor 76 is provided so that the volume V3a is larger than the volume V3b. However, the oxygen sensor 76 may be provided so that the volume V3a is smaller than the volume V3b. The volume V3a is the volume of the portion of the exhaust passage member 51, which is from the exhaust port 34 to oxygen sensor 76. The volume V3b is the volume of the portion of the exhaust passage member 51, which is from the oxygen sensor 76 to the upstream end of the catalyst 53.

In the above-described embodiment, the oxygen sensor 76 is provided so that the path length D3a is longer than the path length D3b. However, the oxygen sensor 76 may be provided so that the path length D3a is shorter than the path length D3b. The path length D3a is the path length of the portion of the exhaust passage member 51, which is from the exhaust port 34 to oxygen sensor 76. The path length D3b is the path length of the portion of the exhaust passage member 51, which is from the oxygen sensor 76 to the upstream end of the catalyst 53.

While the catalyst 53 is provided below the engine main body in the above-described embodiment, the location of the catalyst 53 is not limited as long as the catalyst 53 is in the exhaust passage member 51. The catalyst 53 may be provided in the muffler 54. The catalyst 53 may be positioned so that the volume V3 is larger than the volume V4. Alternatively, the catalyst 53 may be provided in front of the engine main body 20. In addition to the above, a plurality of catalysts may be provided in the exhaust passage member 51. In this case, the temperature of at least one of the plurality of catalysts is estimated. It is preferable that the catalyst whose temperature is estimated is positioned so that the volume V3 is larger than the volume V4, however, the position of the catalyst is not limited to this.

While the injector 42 is arranged to inject fuel into the intake passage member 41 in the above-described embodiment, the injector 42 may be arranged to inject fuel into the combustion chamber 30. The injector 42 may be provided in the engine main body 20.

In the above-described embodiment, the injector 42 is equivalent to the fuel supplier in the present teaching.

However, the fuel supplier in the present teaching is not limited to the injector. The fuel supplier in the present teaching may be another device as long as it is configured to supply fuel into the combustion chamber. For example, the fuel supplier in the present teaching may be a carburetor configured to supply fuel into the combustion chamber by depression.

In the above-described embodiment, only one throttle valves 45 is provided for one combustion chamber 30. In this regard, a plurality of throttle valves 45 may be provided for one combustion chamber 30. Thus, at least one throttle valve 45 is provided for one combustion chamber 30. That is, in one intake passage member 41 which is from the corresponding one combustion chamber 30 to the atmosphere suction port 41 a, at least one throttle valve 45 is provided.

The engine unit 11 of the above-described embodiment is a natural air-cooled engine. In this regard, in the present teaching, the air-cooled engine unit may be a forced air-cooled engine unit. The forced air-cooled engine unit includes a shroud and a fan. The shroud is provided to cover at least a part of the engine main body. As the fan is driven, air is introduced into the inside of the shroud.

While the engine unit 11 of the above-described embodiment is the air-cooled engine unit, the engine unit of the present teaching may be a water-cooled engine unit. The engine temperature sensor 72 of the present embodiment directly detects the temperature of the engine main body 20. However, in cases where the engine unit 11 is a water-cooled engine unit, the engine temperature sensor 72 may be configured to indirectly detect the temperature of the engine main body 20 by detecting the temperature of the coolant water.

While the engine unit 11 of the above-described embodiment is a single-cylinder engine unit, the engine unit of the present teaching may be a multi-cylinder engine unit including a plurality of combustion chambers. In this alternative, the number of atmosphere suction ports 41 a may be smaller than the number of the combustion chambers 30. That is to say, a part of the intake passage member 41 for one of the combustion chambers 30 may function as a part of the intake passage member 41 for another one of the combustion chambers 30. The number of the atmosphere suction ports 41 a may be one. Furthermore, the number of atmosphere discharge ports 64a may be smaller than the number of the combustion chambers 30. That is to say, a part of the exhaust passage member 51 for one of the combustion chambers 30 may function as a part of the exhaust passage member 51 for another one of the combustion chambers 30. The number of the atmosphere discharge ports 64a may be one. Furthermore, when the number of the combustion chambers 30 is an odd number larger than four, two atmosphere discharge ports 64a may be provided at the left and right, respectively.

The combustion chamber in the present teaching may include a main combustion chamber and an auxiliary combustion chamber communicating with the main combustion chamber. In this case, the main combustion chamber and the auxiliary combustion chamber constitute the single combustion chamber.

The above-described embodiment deals with an example in which the engine unit of the present teaching is used in a sports motorcycle. In this regard, objects to which the engine unit of the present teaching is applied are not limited to sports motorcycles. The engine unit of the present teaching may be applied to motorcycles other than sports motorcycles. For example, the engine unit of the present teaching is applicable to scooters, a kind of motorcycle. Moreover, the engine unit of the present teaching is applicable to leaning vehicles other than motorcycles. The leaning vehicles are vehicles each having a vehicle body frame which leans to the right of the vehicle when turning right, and leans to the left of the vehicle when turning left. Moreover, the engine unit of the present teaching is applicable to straddled vehicles other than motorcycles. The straddled vehicles encompass all the variety of vehicles that a rider rides as if the rider straddles a saddle. The straddled vehicles encompass motorcycles, tricycles, four-wheelers (all-terrain vehicles (ATVs)), personal water crafts, snowmobiles, and the like.

In this description, the path length of a freely-selected portion of the intake passage member 41 means the length of the path provided in the freely-selected portion. A similar definition is applied to the path length of a freely-selected portion of the exhaust passage member 51. In this description, the path length means the length of the center line of the path. The path length in the expansion chamber (60a, 60b, 60c) in the muffler 54 is the length of the path connecting the center of the inflow port of the expansion chamber with the center of the outflow port of the expansion chamber in the shortest distance. In this description, the upstream end of the catalyst 53 is the end of the catalyst 53 at which the path length from the combustion chamber 30 is the shortest. The downstream end of the catalyst 53 is the end of the catalyst 53 at which the path length from the combustion chamber 30 is the longest. A similar definition is applied to the upstream and downstream ends of elements other than the catalyst 53.

Reference Signs List

11: engine unit
20: engine main body
30: combustion chamber
31: spark plug (ignition device)

32: ignition coil (ignition device)
33: intake port
34: exhaust port
41: intake passage member
41 a: atmosphere suction port
42: injector (fuel supplier)
45: throttle valve
51: exhaust passage member
53: catalyst
64a: atmosphere discharge port
71: engine rotation speed sensor
73: throttle position sensor
74: intake pressure sensor
76: oxygen sensor
80: ECU (controller)
81: catalyst temperature estimating unit
82: fuel supply amount controlling unit
85: steady-state estimated catalyst temperature calculating unit
86: estimated catalyst temperature calculating unit

**Claims**

1. At port to the atmosphere discharge port;
   a catalyst provided in the exhaust passage member;
   a fuel supplier configured to supply fuel into the combustion chamber;
   a throttle valve provided in the intake passage member;
   a throttle position sensor configured to detect an opening degree of the throttle valve; an engine rotation speed sensor configured to detect engine rotation speed; and
   a controller to which a signal from the throttle position sensor and a signal from the engine rotation speed sensor are input, the controller configured to control a fuel supply amount of the fuel supplier, wherein:

   the number of throttle valves provided for one combustion chamber is at least one, and the throttle valve is positioned so that a combustion-chamber-side volume is smaller than an atmosphere-side volume, the combustion-chamber-side volume being a volume of a portion of the intake passage member that is from the throttle valve to the intake port, the atmosphere-side volume being a volume of a portion of the intake passage member that is from the atmosphere suction port to the throttle valve; and
   the controller is configured to control the fuel supply amount of the fuel supplier and to estimate a temperature of the catalyst, based on the engine rotation speed and based on an opening degree of the throttle valve positioned in the intake passage member so that the combustion-chamber-side volume is smaller.

2. The engine unit according to claim 1, wherein
   the controller includes:

   a steady-state estimated catalyst temperature calculating unit configured to calculate a steady-state estimated catalyst temperature, which is an estimated temperature value of the catalyst in a steady operation state, based on the engine rotation speed and based on the opening degree of the throttle valve positioned in the intake passage member so that the combustion-chamber-side volume is smaller; and
   an estimated catalyst temperature calculating unit configured to correct the steady-state estimated catalyst temperature calculated by the steady-state estimated catalyst temperature calculating unit based on information indicating an operation state of the engine unit, thereby to calculate an estimated temperature of the catalyst.

3. The engine unit according to claim 2, wherein
   the estimated catalyst temperature calculating unit is configured to correct the steady-state estimated catalyst temperature calculated by the steady-state estimated catalyst temperature calculating unit at least based on the opening degree of the throttle valve positioned in the intake passage member so that the combustion-chamber-side volume is smaller, thereby to calculate the estimated temperature of the catalyst.

4. The engine unit according to claim 3, wherein
the estimated catalyst temperature calculating unit is configured to correct the steady-state estimated catalyst temperature calculated by the steady-state estimated catalyst temperature calculating unit at least based on the engine rotation speed and based on the opening degree of the throttle valve positioned in the intake passage member so that the combustion-chamber-side volume is smaller, thereby to calculate the estimated temperature of the catalyst.

5. The engine unit according any one of claims 2 to 4, wherein
the catalyst is positioned so that a volume of a first portion of the exhaust passage member, the first portion being from the exhaust port to an upstream end of the catalyst, is smaller than a volume of a second portion of the exhaust passage member, the second portion being from a downstream end of the catalyst to the atmosphere discharge port.

6. The engine unit according to claim 6, further comprising
an oxygen sensor provided to the exhaust passage member and provided upstream of the catalyst in a flow direction of the exhaust gas, the oxygen sensor being configured to detect oxygen concentration in the exhaust gas in the exhaust passage member, the oxygen sensor positioned so that a volume of a third portion of the exhaust passage member, the third portion being from the exhaust port to the oxygen sensor, is smaller than a volume of a fourth portion of the exhaust passage member, the fourth portion being from the oxygen sensor to the atmosphere discharge port, wherein
the controller is configured to control the fuel supply amount of the fuel supplier at least based on: the opening degree of the throttle valve positioned in the intake passage member so that the combustion-chamber-side volume is smaller; the engine rotation speed; and a signal from the oxygen sensor.

FIG.1

FIG.2

FIG.3

FIG.4

| | | |
|---|---|---|
| 71 — ENGINE ROTATION SPEED SENSOR | | |
| 72 — ENGINE TEMPERATURE SENSOR | | |
| 73 — THROTTLE POSITION SENSOR | | |
| 74 — INTAKE PRESSURE SENSOR | | |
| 75 — INTAKE TEMPERATURE SENSOR | | |
| 76 — OXYGEN SENSOR | | |

ECU — 80

CATALYST TEMPERATURE ESTIMATING UNIT — 81
STEADY-STATE ESTIMATED CATALYST TEMPERATURE CALCULATING UNIT — 85
ESTIMATED CATALYST TEMPERATURE CALCULATING UNIT — 86

FUEL SUPPLY AMOUNT CONTROLLING UNIT — 82        84
87 — BASIC FUEL SUPPLY AMOUNT CALCULATING UNIT
88 — OXYGEN SENSOR CORRECTING UNIT
89 — OXYGEN SENSOR CORRECTION CANCELLING UNIT
90 — CATALYST TEMPERATURE CORRECTING UNIT
83 — IGNITION TIMING CONTROLLING UNIT

ACTUATION INSTRUCTING UNIT

INJECTOR — 42
FUEL PUMP — 44
IGNITION COIL — 32

FIG.5

FIG.6

TEMPERATURE

Ta

Tb

Eb

Ec

Ed

B

TIME

FIG.7

THROTTLE OPENING DEGREE

Kmax

0

0

ENGINE ROTATION SPEED

Cmax

A1

A2

## INTERNATIONAL SEARCH REPORT

| International application No. |
| --- |
| PCT/JP2015/085438 |

**A. CLASSIFICATION OF SUBJECT MATTER**
*F02D9/10*(2006.01)i, *F02D45/00*(2006.01)i, *F02D41/18*(2006.01)i, *F01N3/24* (2006.01)i

According to International Patent Classification (IPC) or to both national classification and IPC

**B. FIELDS SEARCHED**

Minimum documentation searched (classification system followed by classification symbols)
F02D9/10, F02D41/00-45/00, F01N3/24

Documentation searched other than minimum documentation to the extent that such documents are included in the fields searched
Jitsuyo Shinan Koho           1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2003-343242 A  (Honda Motor Co., Ltd.), 03 December 2003 (03.12.2003), paragraphs [0010] to [0017], [0020] to [0028] (Family: none) | 1-6 |
| Y | Microfilm of the specification and drawings annexed to the request of Japanese Utility Model Application No. 116234/1977(Laid-open No. 42807/1979) (Toyota Motor Co., Ltd.), 23 March 1979 (23.03.1979), page 8, line 20 to page 9, line 9; fig. 1 (Family: none) | 1-6 |

☒ Further documents are listed in the continuation of Box C.   ☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 March 2016 (08.03.16) | Date of mailing of the international search report<br>22 March 2016 (22.03.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2015/085438

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 11-132031 A  (Toyota Motor Corp.),<br>18 May 1999 (18.05.1999),<br>paragraphs [0016] to [0020]<br>(Family: none) | 1-6 |
| Y | JP 2007-187004 A  (Honda Motor Co., Ltd.),<br>26 July 2007 (26.07.2007),<br>paragraphs [0011] to [0016]; fig. 1 to 2<br>& CN 101000003 A | 5-6 |
| Y | JP 2006-152806 A  (Aisan Industry Co., Ltd.),<br>15 June 2006 (15.06.2006),<br>claim 1; paragraphs [0011] to [0012], [0018] to [0019]; fig. 1 to 3<br>& CN 1782337 A | 6 |
| A | JP 2003-74378 A  (Keihin Corp.),<br>12 March 2003 (12.03.2003),<br>paragraphs [0020], [0035]; fig. 1 to 2, 5<br>(Family: none) | 1-6 |
| A | JP 2012-2163 A  (Suzuki Motor Corp.),<br>05 January 2012 (05.01.2012),<br>claims; fig. 2<br>(Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003343242 A

- JP 2011220178 A